# EUROPEAN PATENT APPLICATION

(11) **EP 2 810 556 A1**
(43) Date of publication of application: **10.12.2014**
(21) Application number: 13853484.7
(22) Date of filing: 07.11.2013
(51) Int. Cl.: A01K 61/00

(54) **OYSTER CULTURING APPARATUS**

(30) Priority: 09.11.2012 KR 20120126974; 04.01.2013 KR 20130001236
(71) Applicant: Park, Song Bum, Taean-gun, Chungcheongnam-do 357-935 (KR)
(72) Inventor: Park, Song Bum, Taean-gun, Chungcheongnam-do 357-935 (KR)
(74) Representative: Vossius & Partner
(86) International application number: PCT/KR2013/010085
(87) International publication number: WO 2014/073888

(57) **Abstract**

The present invention relates to oyster farming, and more particularly, to an oyster farming apparatus which may efficiently farm oysters of good quality. According to the present invention, there is provided an oyster farming apparatus including: a hauling rope which is extended along a surface of water on the surface of water; a plurality of cultivating net connection ropes which are extended downward from the hauling rope at a plurality of spots of the hauling rope; and a plurality of hanging members which are alternately arranged with the plurality of cultivating connection ropes along the extended direction of the hauling rope, wherein, as the hauling rope is hauled, each of the plurality of cultivating connection ropes is hung on each of the plurality of hanging members so that the plurality of cultivating connection ropes rise.

## Description

### [Technical Field]

The present invention relates to oyster farming, and more particularly, to an oyster farming apparatus which may efficiently farm oysters of good quality.

### [Background Art]

The oysters belong to shellfishes. The oysters have been eaten for a long time. The oysters have good taste and smell and contain a great amount of glycogen which is the source of energy in a human body and a great amount of zinc which activates sex hormone, and thus the oysters are drawing more attention than before, and the oyster farming industry is on the gradual increase.

Oysters, which are exposed to the area above the sea level and go through extreme environments (strong sunbeams in summer and cold wind in winter), contain a lot of nutrients, and thus such oysters have better taste and are of large sizes. In the oyster farming, in order to provide such environments, according to the conventional art, the structure for the oyster farming was installed in an area where the tidal range is wide, and thus the oysters were dipped in the water at the high tide and the oysters were exposed at the low tide. However, according to such a conventional method, installing the structure for the farming is difficult and the button under the sea is weak and thus the structure may be washed away, and because the tidal range is used, there are regional limitations.

### [Disclosure]

### [Technical Problem]

An object of the present invention is to provide an oyster farming apparatus which may efficiently farm oysters of good quality. Another object of the present invention is to provide an oyster farming apparatus which allows efficient work. Another object of the present invention is to provide an oyster farming apparatus which does not need a separate power. Another object of the present invention is to provide an oyster farming apparatus which can farm high quality oysters regardless of regions. Another object of the present invention is to provide an oyster farming apparatus which can efficiently use the limited farming space.

### [Technical Solution]

In order to solve the above problem, according to an aspect of the present invention,

There is provided an oyster farming apparatus including: a hauling rope which is extended along a surface of water on the surface of water; a plurality of cultivating net connection ropes which are extended downward from the hauling rope at a plurality of spots of the hauling rope; and a plurality of hanging members which are alternately arranged with the plurality of cultivating connection ropes along the extended direction of the hauling rope, wherein, as the hauling rope is hauled, each of the plurality of cultivating connection ropes is hung on each of the plurality of hanging members so that the plurality of cultivating connection ropes rise.

The oyster farming apparatus may further include an operating motor which hauls the hauling rope.

The hanging member may include a plurality of rings, which the hauling rope passes, and include a ring fixing structure which fixes the plurality of rings, and the ring-fixing structure may include a fixing rope which is extended along the extended direction of the hauling rope and is fixed by a consecutive coupling of the plurality of rings.

The hauling rope may be positioned above the fixing rope, and the plurality of cultivating net connection ropes may pass the ring-shaped ring.

The hanging member may be of a ring shape having an opening part which is partly opened.

The hanging member may include a plurality of rings, which the hauling rope passes, and may include a ring fixing structure which fixes the plurality of rings, and the ring-fixing structure may include a support bar which respectively fixes the plurality rings.

The oyster farming apparatus may further include a hauling drum around which the plurality of hauling ropes are coiled, in which there are a plurality of hanging ropes, and wherein at least one of the plurality of hauling ropes is coiled around the hauling drum in the opposite direction.

According to another aspect of the present invention,

There is provided an oyster farming apparatus including: a fixing rope which is extended along a surface of water on the surface of water and at which a plurality of ring-shaped hanging members are fixed; a plurality of cultivating connection ropes which are extended downward from the fixing rope and on which a plurality of cultivating nets respectively hang; a hauling rope which passes the plurality of hanging members in order and cross the cultivating net connection rope so as to be coupled; and a rotatable wind-up shaft around which one end of the hauling rope is coiled.

According to another aspect of the present invention,

There is provided an oyster farming apparatus including: a fixing rope which is extended along a surface of water on the surface of water; a plurality of cultivating net connection ropes which are extended downward from the fixing rope and on which a plurality of cultivating nets respectively hang; a hauling rope which is positioned below the fixing rope and is extended along the surface of water on the surface of water, and at which a plurality of ring-shaped hanging members, which the plurality of cultivating connection ropes respectively pass, are fixed; and a rotatable wind-up shaft around which one end of the hauling rope is coiled.

According to another aspect of the present invention,

There is provided an oyster farming apparatus including: a hauling rope which is extended along a surface of water on the surface of water and at which a plurality of connection rings are fixed; a fixing rope which passes the plurality of connection rings in order; a plurality of cultivating net connection ropes which are vertically extended, on which a plurality of cultivating nets hang, and which are connected to the connection ring; a plurality of hanging members on which the plurality of cultivating net connection ropes respectively hang; and a rotatable wind-up shaft around which one end of the hauling rope is coiled.

According to another aspect of the present invention,

There is provided an oyster farming apparatus including: a plurality of cultivating connection ropes which are vertically extended and on which a plurality of cultivating nets hang; a wind-up shaft around which upper parts of the plurality of cultivating net connection ropes are respectively coiled; and an operating motor which rotates the wind-up shaft.

According to another aspect of the present invention,

There is provided an oyster farming apparatus including: a hauling rope which is fixed to be extended along a tidal direction on a sea level; a plurality of cultivating net connection ropes which are extended downward from the hauling rope at a plurality of spots of the hauling rope; a mobile object which may be moved by a tide and includes a plurality of hanging members which are arranged alternately with the plurality of cultivating net connection ropes along an extended direction of the hauling rope; and a guide structure which guides movement of the mobile object, wherein, as the mobile object is moved by the tide, the plurality of cultivating net connection ropes respectively hang on the plurality of hanging members so that the plurality of cultivating net connection ropes ascend.

The guide structure may be extended along a tidal direction and may include a fixed guide rope and two rings which the guide rope passes and which are coupled to the mobile object.

The oyster farming apparatus may further include two stoppers which interact with the two rings to limit the movement section of the mobile object, in which a hanging groove, on which the ring may be hung, may be prepared in the two stoppers.

According to another aspect of the present invention,

There is provided an oyster farming apparatus including: a hauling rope which is connected to a mobile member which is moved along a tidal direction on a surface of water; a plurality of cultivating net connection ropes which are extended downward from the hauling rope at a plurality of spots of the hauling rope; and a fixing body including a plurality of hanging members which are arranged alternately with the plurality of cultivating net connection ropes along an extended direction of the hauling rope, wherein the hauling rope can perform a reciprocating motion along the extended direction according to the movement of the mobile member.

According to another aspect of the present invention,

There is provided an oyster farming apparatus including: a fixing body which is coupled such that a wind-up shaft may be rotated; a plurality of cultivating net connection ropes which are extended downward and whose upper part is coiled around the wind-up shaft; and a water turbine which is rotated along with the wind-up shaft, wherein the water turbine is rotated by the tide.

According to another aspect of the present invention,

There is provided an oyster farming apparatus including: a plurality of fixing support units; a plurality of rotation support units which are rotatably connected to the plurality of respective fixing support units and whose end's upper and lower positions are changed; a hauling rope which is connected to the plurality of rotation support units respectively in order; and a plurality of cultivating nets which are connected to the rotation support unit, wherein the cultivating net is hung on and connected to the rotation support unit, or is fixed at and coupled to the rotation support unit.

According to another aspect of the present invention,

There is provided an oyster farming apparatus including: a cultivating net installation bar which allows rotation so that upper and lower positions of the end are possible and at which the cultivating net is installed; and an operating unit which allows rotation of both directions by a tide, wherein the cultivating net installation bar is rotated by rotation of the operating unit, and the cultivating net installation bar and the operating unit are integrally formed.

The oyster farming apparatus may further include a hanging structure so that the cultivating net installation bar may stop rotation at two rotation positions.

### [Advantageous Effects]

According to the present invention, all the objects of the present invention can be achieved. Specifically, the oyster cultivating net is periodically exposed to the area above the sea level, and thus high quality oysters can be efficiently farmed regardless of the regions. Furthermore, the oyster cultivating net may be submerged using the tide, and the no separate power needed. Furthermore, the oyster cultivating nets can be alternately exposed to the area above the surface of water, and thus the efficiency of spatial utilization is high.

### [Description of Drawings]

FIG. 1 illustrates an oyster farming apparatus according to a first embodiment of the present invention.
FIG. 2 is an extended view of a hauling rope and a cultivating net connection rope illustrated in FIG. 1.
FIGS. 3 and 4 illustrate two operation states of the oyster farming apparatus of FIG. 1.
FIG. 5 illustrates another embodiment of a ring support structure in the oyster farming apparatus of FIG. 1.
FIGS. 6 and 7 illustrate another embodiment of a cultivating net submersible unit of FIG. 1 and show respective two operation states.
FIGS. 8 and 9 illustrate another embodiment of the cultivating net submersible unit of FIG. 1 and show different operation states.
FIG. 10 illustrates another embodiment of the cultivating net submersible unit of FIG. 1.
FIGS. 11 and 12 illustrate another embodiment of the cultivating net submersible unit of FIG. 1 and show respective two operation states.
FIG. 13 illustrates another embodiment of the cultivating net submersible unit of FIG. 11.
FIG. 14 illustrates another embodiment of a hauling unit in the oyster farming apparatus of FIG. 1.
FIG. 15 illustrates another embodiment of a hauling unit in the oyster farming apparatus of FIG. 1.
FIG. 16 illustrates an oyster farming apparatus according to a second embodiment of the present invention.
FIG. 17 is a side view of an oyster farming apparatus according to a third embodiment of the present invention.
FIG. 18 is a perspective view of the oyster farming apparatus of FIG. 17.
FIG. 19 is an enlarged side view of a first stopper of FIG. 17.
FIGS. 20 and 21 illustrate an oyster farming apparatus according to a fourth embodiment of the present invention and show respective two operation states.
FIGS. 22 and 23 illustrate an oyster farming apparatus according to a fifth embodiment of the present invention and show respective two operation states.
FIGS. 24 and 25 illustrate an oyster farming apparatus according to a sixth embodiment of the present invention and show respective two operation states.
FIG. 26 is an enlarged sectional view of a rotation shaft of FIG. 24.

### [Detailed Description of Exemplary Embodiments]

Hereinafter, embodiments of the present invention will be described with referenced to the attached drawings.

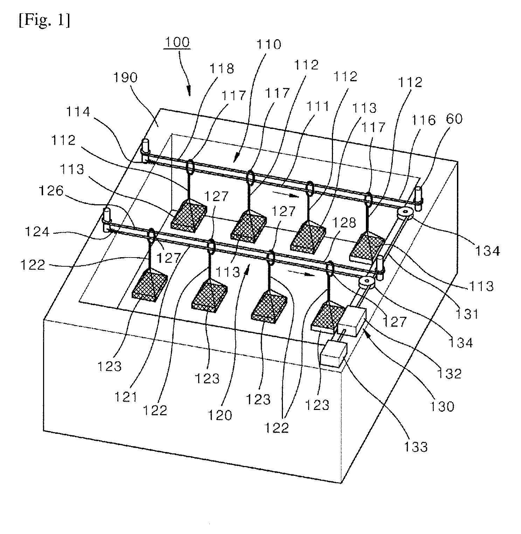

FIG. 1 illustrates an oyster farming apparatus according to a first embodiment of the present invention. Referring to FIG. 1, an oyster farming apparatus 100 includes a first cultivating net submersible unit 110, a second cultivating net submersible unit 120, and a hauling unit 130. The oyster farming apparatus 100 is installed in a farm and periodically submerges a plurality of cultivating nets so as to cultivate oysters.

The first cultivating net submersible unit 110 includes a first hauling rope 111, a plurality of first cultivating net connection ropes 112, a plurality of first cultivating nets 113, and a first support unit 116.

The first hauling rope 111 is extended straight along the surface of the water. In the present embodiment, the direction of being hauled (arrow direction) by the hauling unit 130 in the first hauling rope 111 is defined as a first hauling direction, and the opposite direction is defined as the opposite direction of the first hauling direction. A first elastic member 114 is connected to the end of the opposite direction of the first hauling direction of the first hauling rope 111. When the first hauling rope 111 is hauled in the first hauling direction, the first elastic member 114 applies the force which pulls the first hauling rope 111 in the opposite direction of the first hauling direction. The extension spring, etc. may be used as the first elastic member 114. The first elastic member 114 makes easy the initial operation at the time of a fall of a plurality of first cultivating nets 113. One of ordinary skill in the art can understand that the cultivating net 113 can fall by self-gravity of the cultivating net 113 without the first elastic member 114.

A plurality of first cultivating network connection ropes 112 are connected to a plurality of points of the first hauling rope 111, and are extended downward from the first hauling rope 111. A plurality of first cultivating net connection ropes 112 are connected to the first hauling rope 111, and are arranged in series at regular intervals. It is desirable that the plurality of first cultivating connection ropes 112 are the same.

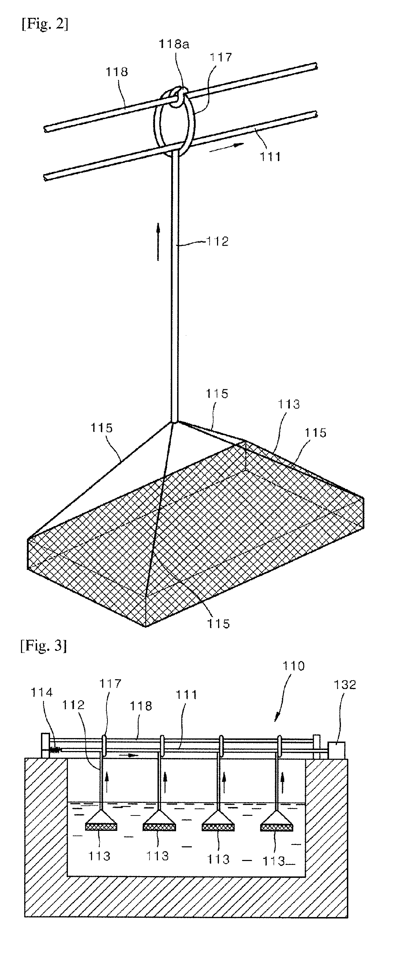

A plurality of first cultivating nets 113 respectively hang on a plurality of cultivating net connection ropes 112. Referring to FIGS. 1 and 2, each first cultivating net 112 is connected to the corresponding first cultivating net connection rope 112 through a plurality of assistant connection ropes 115. A plurality of assistant connection ropes 115 are extended from the bottom of one first cultivating connection rope 112 and are coupled to each edge of the first cultivating net 113. As such, the first cultivating net 113 maintains balance. A plurality of first cultivating nets 113 is of a rectangular parallelepiped with a small height with a mesh member, and young oysters are accommodated inside. The mesh size of the first cultivating net 113 may be appropriately adjusted according to the growth of the young oysters. That is, the mesh size of the first cultivating net 113 may be selected appropriately within 1 to 50mm of the diagonal length according to the size of the young oysters. A plurality of first cultivating nets 113 are arrange in series according to the extended direction of the first hauling rope 111, and the distances with the surface of the water are almost same.

The first support unit 116 includes a plurality of first hanging members 117 and a first hanging member fixing structure 118. The first support unit 116 supports a first hauling rope 111 using a plurality of hanging members 117, and allows the movement of the plurality of first cultivating nets 113 in the perpendicular direction.

A plurality of first hanging members 117 are ring-shaped and are arranged in order along the first hauling rope 111, and the first hauling rope 111 passes the first hanging members 117 in order. The first hanging members 117 correspond to a plurality of first cultivating net connection ropes 112, and when the entire first cultivating net connection ropes 112 are extended downward, the first hanging members 117 are located adjacent in the first hauling direction for the first cultivating connection rope 112. As such, when the first hauling rope 111 is hauled in the first hauling direction, each first cultivating connection rope 112 is hauled on the first hanging member 117 so that the first cultivating net 113 rises. In the present embodiment, it is explained that the first hanging members 117 are ring-shaped, but another means corresponding to the pulley, etc. may also be used.

Both ends of the first hanging member fixing structure 118 are fixed on an embankment 190 and are composed of the extended first fixing rope. The first fixing rope 118 is extended parallel to the extended direction of the first hauling rope 111, and the ring-shaped first hanging member 117 is bound to the first fixing rope 118 so as to maintain the predetermined position.

The second cultivating net submersible unit 120 includes a second hauling rope 121, a plurality of second cultivating net ropes 122, a plurality of second cultivating nets 123, and a second support unit 126. The second cultivating net submersible unit is arranged parallel to the first cultivating net submersible unit 110.

The second hauling rope 121 is extended straight along the surface of the water on the surface of the water in parallel to the first hauling rope 111. The second hauling rope 121 is positioned on the same height as that of the first hauling rope 111. In the present embodiment, the direction (arrow direction) hauled by the hauling unit in the second hauling rope 121 is defined as the second hauling direction, and the opposite direction is defined as the opposite direction of the second hauling direction.

The second elastic member 124 is connected to the end of the opposite direction of the second hauling direction of the second hauling rope 121. When the second hauling rope 121 is hauled in the second hauling direction, the second elastic member 124 applies force which pulls the second hauling rope 121 in the opposite direction of the second hauling direction. An extension spring, etc. may be used as the second elastic member 124. The second elastic member 124 makes the initial operation easy at the time of a fall of a plurality of second cultivating nets 123.

A plurality of second cultivating connection ropes 122 are connected to a plurality of points of the second cultivating rope 121, and are extended downward from the second hauling rope 121. A plurality of second cultivating net connection ropes 122 are placed away at regular intervals along the second hauling rope 121.

A plurality of second cultivating nets 123 respectively hang on a plurality of second cultivating net connection ropes. Each second cultivating net 123 is connected to the second cultivating net connection rope 122 in the same manner as in the first cultivating net submersible unit 110. The configuration of the second cultivating net 123 is the same as that of the first cultivating net 113.

The second support unit 126 includes a plurality of second hanging members 127 and a second hanging member fixing structure 128. A plurality of second hanging members 127 have the same configuration and function as that of the first hanging member 117, and thus the detailed description thereof is omitted here. Both ends of the second hanging member fixing structure 128 are fixed on the embankment and are composed of the extended second fixing rope. The second fixing rope 128 is extended parallel to the extension direction of the second hauling rope, and the ring-shaped second hanging member 127 is fixed in the same manner as that of the first cultivating submersible unit 110.

The hauling unit 130 includes a main hauling rope 131 which is extended and in which the first hauling rope 111 and the second hauling rope 121 are connected, an operating motor 132 which hauls the main hauling rope 131, and a control device 133 which controls the operating motor 132. The main hauling rope 131 is extended to form a right angle with the two hauling ropes 111 and 121. The two parts in which the main hauling rope 131 is connected to two hauling ropes 111 and 121 is supported by each support pulley 134. The operating motor 132 is a rotatable electric motor, may be rotated in both directions, and pulls or releases the main hauling rope according to the direction of the rotation. The controller 133 controls operation of the operating motor 132. The submerging period of the plurality of cultivating nets 113 and 123 is adjusted by the controller 133.

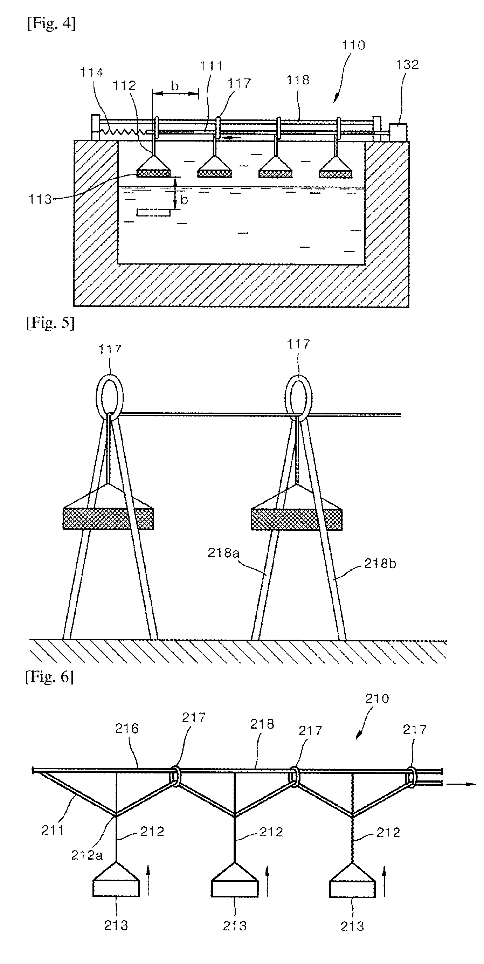

Hereinafter, the first embodiment will be described with reference to FIGS. 3 and 4.

In FIG. 3, all of a plurality of first cultivating nets 113 of the first cultivating net submersible unit 110 are submerged. All of a plurality of first cultivating net connection ropes 112 are extended downward from the first hauling rope 111. Each of the plurality of first hanging members 117 is placed adjacent to the first hauling direction for the corresponding first cultivating net connection rope 112. After a certain time passes at the submerged state, the operating motor 132 receives a control signal from the controller (133 of FIG. 1) and pulls the first hauling rope 111. As such, the first hauling rope 111 is moved in the arrow direction, and the first cultivating connection rope 112 is hung on the corresponding first hanging member 117 so as to raise the first cultivating net 113 while moving along the first hauling rope 111. If the first cultivating net 113 rises by a preset height so as to be exposed, the operation of the operating motor 132 stops. FIG. 4 illustrates the state where the first cultivating net 113 rises so as to be exposed to the area above the surface of water. Referring to FIG. 4, in the state illustrated in FIG. 1, the first cultivating net 113 rises by height "b" so as to be exposed to the area above the surface of water. The first elastic member 114 is extended by the moved distance of the first hauling rope 111 and applies force which pulls the first hauling rope 111 in the opposite direction of the first hauling direction. After a certain time passes in the state the first cultivating net 113 is exposed to the area above the surface water, the operating motor 132 receives a control signal from the controller (133 of FIG. 1) and releases the first hauling rope 111. As such, the first hauling rope 111 is moved in an arrow direction, and at this time, the initial operation is easily performed by the first elastic member 114. As the first hauling rope 111 is released, a plurality of first cultivating nets 111 descend so as to be submerged as illustrated in FIG. 3. The second cultivating net submersible unit 120 of FIG. 1 also operates as in the first cultivating net submersible unit 110 illustrated with reference to FIGS. 3 and 4, and thus a plurality of second cultivating nets 123 are also repeatedly submerged.

It was illustrated in the first embodiment that the hauling unit 130 is operated by the operating motor 132, but the present embodiment is not limited thereto. The case where the operating motor 132 is not used is also within the scope of the present invention, and in this case, the hauling unit 130 is manually operated.

It was explained above that the oyster farming apparatus 100 according to the first embodiment is installed in a farm which uses an embankment, but the embodiment is not limited thereto, and the oyster farming apparatus 100 may also be installed in a water tank or a fish cage, etc.

It was explained above that the oyster farming apparatus 100 according to the first embodiment is configured to have two cultivating net submersible units, but it is possible to have three or more cultivating net submersible units.

FIG. 5 illustrates another embodiment of a hanging member fixing structure in the embodiment illustrated in FIG. 1. Referring to FIG. 5, the hanging member fixing structure includes two supports 218a and 218b which respectively support a plurality of rings 117 which are hanging members. The two supports 218a and 218b are formed in the shape of legs which are vertically extended. Here, the lower end is fixed on the floor of the farm, and the upper end is coupled to the ring 117. The two supports 218a and 218b are formed to be spaced apart more toward the floor so as to stably support the ring 117.

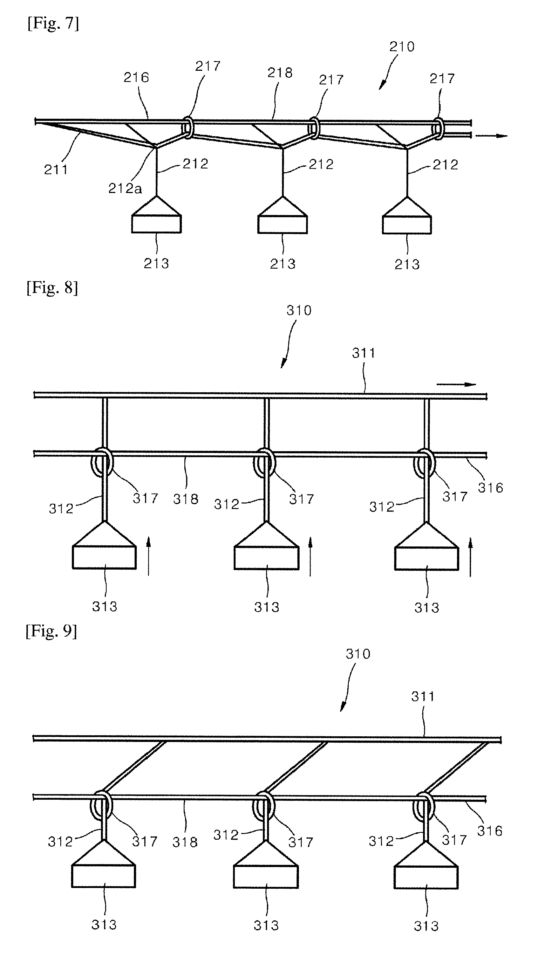

FIGS. 6 and 7 illustrate another embodiment of the cultivating net submersible unit and show two operation states. Referring to FIG. 6, the cultivating net submersible unit 210 includes a hauling rope 211, a plurality of cultivating net connection ropes 212, a plurality of cultivating nets 213, and a support unit 216. The cultivating unit 216 has the same configuration as that of the first support unit 116 in the embodiment illustrated in FIGS. 1 to 4. A plurality of cultivating net connection ropes 212 are extended downward from the fixing rope 218, and the cultivating net 213 is hung. The hanging members 217 corresponding to each of a plurality of cultivating net connection ropes 212 are placed apart at regular intervals toward the hauling direction. The hauling rope 211 is extended long along the fixing rope 218. The hauling rope 211 passes a plurality of hanging members 217 in order, and one end is fixed at the fixing rope 218 and the other end is coiled around the wind-up shaft (131 of FIG. 1). The hauling rope 211 is connected to a plurality of cultivating net connection ropes 212. The portion 212a, in which the hauling rope 211 is connected to the cultivating net connection rope 212, is positioned at the portion lower than the hanging member 217 when the cultivating net connection rope 212 is completely extended straight downward (state of FIG. 6).

Hereinafter, the operation of the cultivating net submersible unit 210 will be described with reference to FIGS. 6 and 7. Referring to FIG. 6, the cultivating connection rope 212 is completely extended downward. This corresponds to the state the cultivating net 213 is submerged. The hauling rope 211 is extended while repeating the "V" shape. In this state, if the hauling rope 211 is pulled in the arrow direction, the portion where the hauling rope 211 and the plurality of cultivating connection ropes 212 are connected rises so that the plurality of cultivating nets 213 also rise. FIG. 7 illustrates a state where the cultivating net 213 rises by a predetermined amount and then stops. This corresponds to the state where the cultivating net 213 is exposed to the area above the surface of water.

FIGS. 8 and 9 illustrate another embodiment of the cultivating net submersible unit of FIG. 1 and show different operation states. Referring to FIG. 8, a cultivating net submersible unit 310 includes a hauling rope 311, a plurality of cultivating net connection ropes 312, a plurality of cultivating nets 313, and a support unit 311. The support unit 316 has the same configuration as that of the first support 116 illustrated in FIGS. 1 to 4. The hauling rope 311 is positioned above the fixing rope 318, and is extended parallel to the fixing rope 318. The plurality of cultivating net connection ropes 312 are extended downward from the hauling rope 311 and the cultivating net 313 is hung. The middle portion between the upper end and the lower end of the plurality of cultivating net connection ropes 312 passes the hanging member 317.

Hereinafter, the operation of the cultivating net submersible unit 310 is described. Referring to FIG. 8, the cultivating net connection ropes 312 are extended straight downward. This corresponds to the state where the cultivating net 313 is submerged. In this state, if the hauling rope 311 is pulled in the arrow direction, a plurality of cultivating net connection ropes 312 are moved to be hung on the hanging member 317 so that the plurality of cultivating nets 313 rise. FIG. 9 illustrates the state where the cultivating net 313 rises by a predetermined distance and stops. This is the state where the cultivating net 313 is exposed to the area above the surface of water.

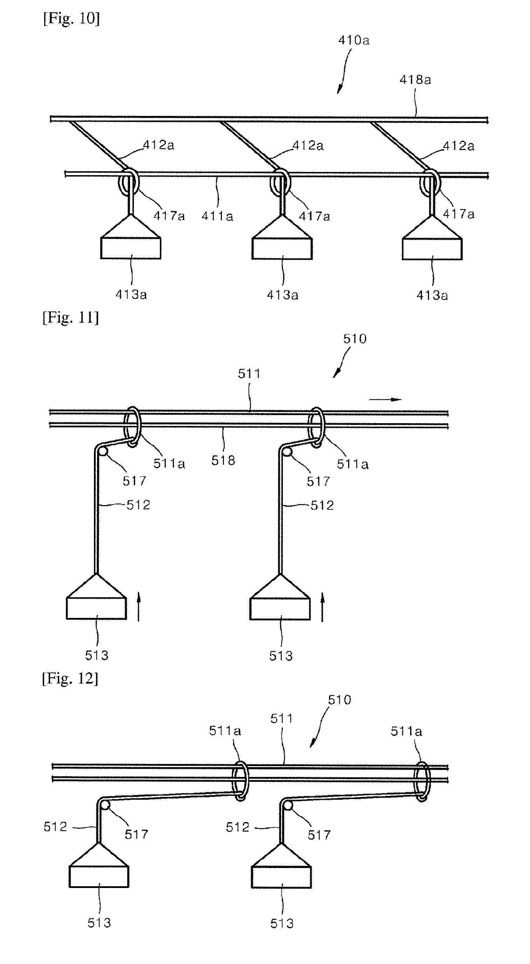

FIG. 10 illustrates another embodiment of the cultivating net submersible unit illustrated in FIG. 1. Referring to FIG. 10, the cultivating net submersible unit 410a includes a hauling rope 411a, a plurality of cultivating net connection ropes 412a, a plurality of cultivating nets 413a, a plurality of hanging members 417a, and a fixing rope 418a. The hauling rope 411a is the same as that of the first hauling rope 111 in the embodiment illustrated in FIGS. 1 to 4, and the fixing rope 418a is the same as the first fixing rope 118 in the embodiment illustrated in FIGS. 1 to 4. A plurality of hanging members 417a are placed apart on the hauling rope 411a so as to be fixed. A plurality of cultivating net connection ropes 412a are extended downward from the fixing rope 418a so that the cultivating rope 413a rises. FIG. 10 illustrates the structure where the hauling rope and the fixing rope are changed in the embodiment illustrated in FIGS. 8 and 9.

FIGS. 11 and 12 illustrate another embodiment of the cultivating net submersible unit illustrated in FIG. 1 and show two operation states. Referring to FIG. 11, the cultivating net submersible unit 510 includes a hauling rope 511 where a plurality of connection rings 511a are placed at regular intervals and are coupled, a fixing rope 518 which passes a plurality of connection rings 511a and are extended parallel to the hauling rope 511, a plurality of cultivating net connection ropes 512 which are extended from a plurality of connection rings 511a, a plurality of cultivating nets 513 which are connected at the bottom of the plurality of cultivating net connection ropes 512, and a plurality of hanging members 517 which are arranged according to the plurality of cultivating net connection ropes 512. The plurality of hanging members 517 may be formed of a projected bar shape which is fixed on the embankment, etc. The fixing rope 518 may guide the movement of the connection ring 511a.

Hereinafter, the operation of the cultivating net submersible unit 510 will be described with reference to FIGS. 11 and 12. Referring to FIG. 11, the upper part of the cultivating net connection rope 512 is hung on the corresponding hanging member 517, and the lower part is extended downward. In this state, if the hauling rope 512 is pulled in the hauling direction, the connection ring 511a is moved along and a plurality cultivating net connection ropes 512 are also moved. The cultivating net connection rope 512 is moved in a state that the cultivating connection rope 512 is hung on the hanging member 517, and the drooped part rises upward so that the cultivating net 513 rises upward.

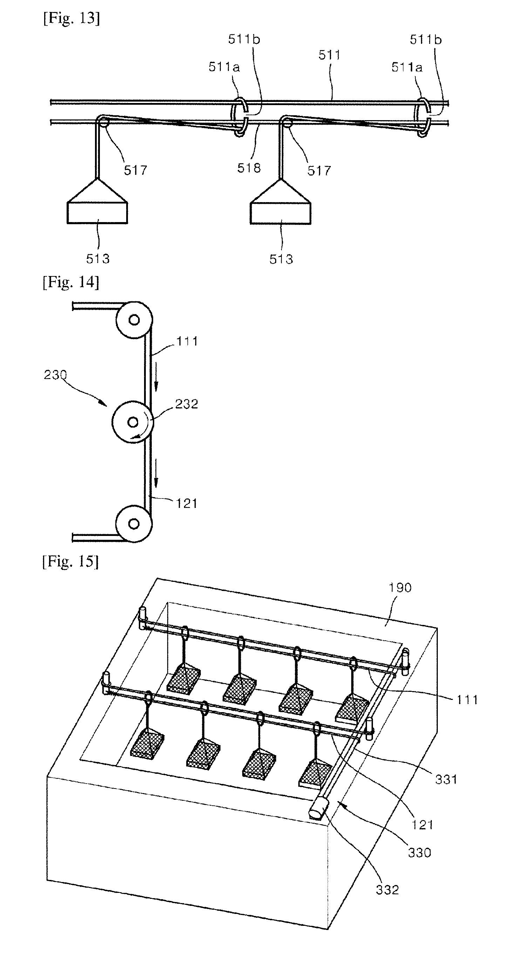

FIG. 13 illustrates another embodiment of the cultivating net submersible unit illustrated in FIG. 11. Referring to FIG. 13, the hanging member 517 is installed on the fixing rope 518. The opening unit 511b is formed on the connection ring 511a. The entrance and exit of the fixing rope 518 is possible through the opening unit 511a, and thus the installation of the fixing rope 518 becomes easy. Such a ring may be applied in the same manner in other embodiments, and thus the work performance may be improved.

FIG. 14 illustrates another example of the hauling unit in the embodiment illustrated in FIG. 1. Referring to FIG. 14, the hauling unit 230 includes a hauling drum 232 which is rotated by the operating motor (not shown). The first hauling rope 111 and the second hauling rope 121 are coiled in the opposite direction in the hauling drum 232. As such, one 111 of the two hauling ropes 111 and 211 is hauled by one way rotation of the hauling drum 232, and the other 211 is released so that the first cultivating net (113 of FIG. 1) and the second cultivating net (213 of FIG. 1) alternately ascend and descend. Hence, the limited farming space may be efficiently utilized.

FIG. 15 illustrates another embodiment of a hauling unit in the embodiment illustrated in FIG. 1. Referring to FIG. 15, the hauling unit 330 includes a wind-up shaft 331, an operating motor 332 which rotates the wind-up shaft 331, and a controller (not shown) which controls the operating motor. The two hauling ropes 111 and 121 are coiled around the wind-up shaft 331, and are supported on the embankment 190 in a manner that is rotatable. The two hauling ropes 111 and 121 are pulled in the hauling direction according to the rotation of the wind-up shaft 331, or are released in the opposite direction of the hauling direction. The operating motor 332 is a rotatable electric motor, rotates the wind-up shaft 331, allows rotation in both directions, and pulls and releases the two hauling ropes 111 and 112 according to the rotation direction. The controller controls operation of the operating motor 332. In the embodiment, it was illustrated that the hauling unit is operated using the operating motor 332, but the configuration of rotating the wind-up shaft with the force of a running person is also included in the present invention.

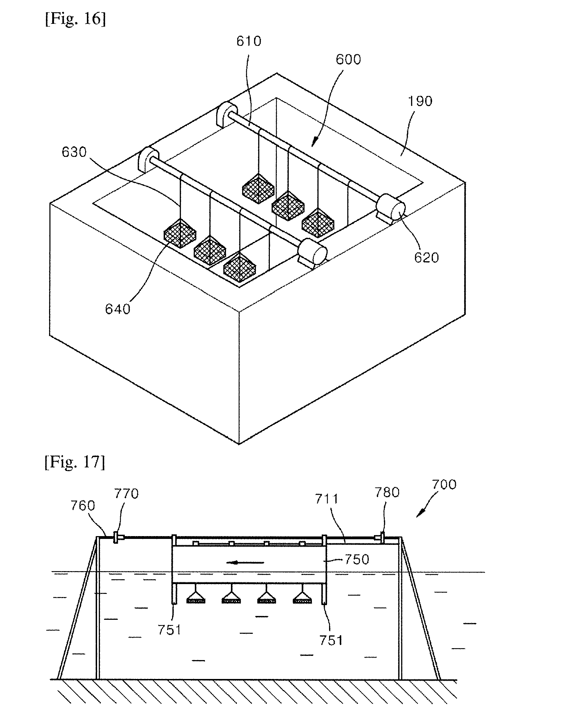

FIG. 16 illustrates an oyster farming apparatus according to a second embodiment of the present invention. Referring to FIG. 16, the oyster farming apparatus 600 includes a wind-up shaft 600 which passes the surface of water of the farm, an operating motor 620 which rotates the wind-up shaft 610, a plurality of cultivating net connection ropes 630 which are extended downward in the state that is coiled around the wind-up shaft 610, and a plurality of cultivating nets 640 which are hung on a plurality of respective cultivating connection ropes 630. The wind-up shaft 610 is rotated along the operation of the operating motor 620 so that the cultivating net 640 ascends or descends. The plurality of oyster farming apparatuses 600 may be installed at the embankment 190. It was illustrated in the present embodiment that the oyster farming apparatus 600 is operated by the operating motor 620, but the wind-up shaft 610 may be manually rotated so that the oyster farming apparatus 600 may be operated.

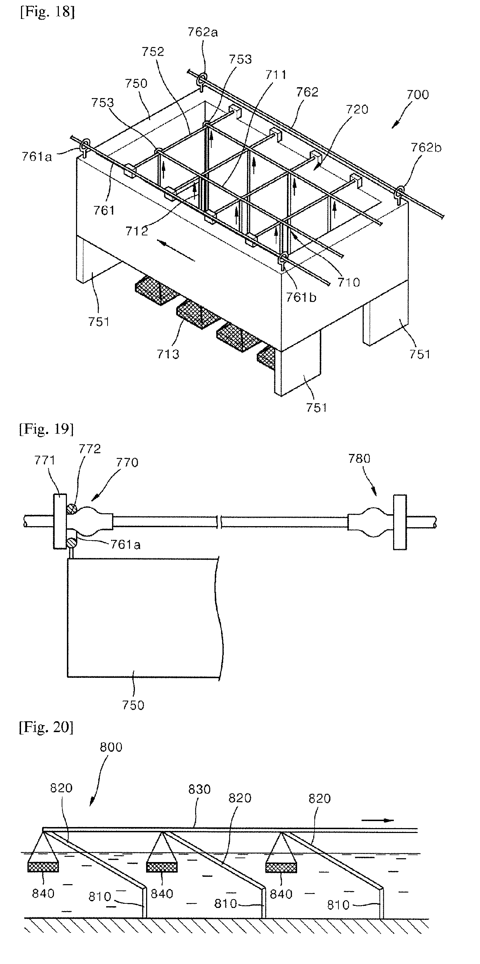

FIGS. 17 and 18 illustrate an oyster farming apparatus according to a third embodiment of the present invention. Referring to FIGS. 17 and 18, the oyster farming apparatus 700 includes a mobile object 750, a mobile object guide structure 760, a first cultivating net submersible unit 710, and a second cultivating net submersible unit 720.

The mobile object 750 is a structure, which may float on the surface of water, and forms the inner space, and the upper part and the lower part are opened. The mobile object may be moved by the tide, and includes a plurality extension plates 751 which are faced against the tide so that the force of the tide may be used to the maximum. A plurality of hanging members 752 are installed on the upper part of the mobile object 750. The hanging member 752 is of a long bar shape which is extended in a direction perpendicular to the movement direction of the mobile object 750, and is extended parallel to the surface of water on the area above the surface of water. A plurality of hanging members 752 are arranged along the moving direction of the mobile object 750. Two guide rings 753, which are placed away along the extended direction of the hanging member 752, are prepared in the hanging member 752 which is located at one end of the movement direction of the mobile object 750 from among a plurality of hanging members 753. A fish cage may be used as the mobile object 750.

The mobile object guide structure 760 includes a first guide rope 761, a second guide rope 762, two first rings 761a and 761b, and two second rings 762a and 762b. The first guide rope 761 is extended parallel to the movement direction of the mobile object 750, and is fixed on the floor of the farm. The second guide rope 762 is extended parallel to the first guide rope 761, and is fixed on the floor of the farm. Two first rings 761a and 761b are ring-shaped and are coupled to the upper part of the mobile object 750, and are arranged along the extended direction of the first guide rope 761. The first guide rope 761 passes two first rings 761a and 761b in order. Two second rings 762a and 762b are ring-shaped and are coupled to the upper part of the mobile object, and are arranged along the extended direction of the second guide rope. Two guide ropes 762 pass two second rings 762a and 762b in order. The mobile object 750 performs the reciprocating motion along the direction of the tide by the mobile object guide structure 761.

First and second stoppers 770 and 780 for limiting the moving section of the mobile object 750 are prepared in the first guide rope 761. The first stopper 770 includes a wall part 771 which blocks movement of the first ring 761a, and a concave part 772 where the first ring 761a is placed when the first ring contacts the wall part 771. The first ring 761a may be placed away from the concave part 772 by the tide which moves the first ring 761a, which is placed on the concave part 772, to the central side of the movement section. The second stopper 780 has the same configuration as that of the first stopper 770, and is fixed against the first stopper 770 on the first guide rope 761. Two stoppers (not shown) are installed in the second guide rope 762 in a manner that is the same as that of the first stopper 770.

The first cultivating submersible unit 710 includes a first hauling rope 761, a plurality of first cultivating connection ropes 712, and a plurality of first cultivating nets 713.

The first hauling rope 711 is extended along the movement direction of the mobile object 750 to pass the above part of a plurality of hanging members 752. One end of the first hauling rope 711 is fixed, and the opposite end passes the guide ring 753 which is prepared in the hanging member 752. A plurality of first cultivating net connection ropes 712 are connected to a plurality of points of the first hauling rope so as to be extended downward. A plurality of first cultivating net connection ropes 712 are placed apart along the first hauling rope at almost regular intervals. When the first cultivating net connection rope 712 is completely drooped, a plurality of cultivating net connection ropes 712 and a plurality of hanging members 712 are alternately placed adjacent to each other. A plurality of first cultivating nets 713 are hung on a plurality of cultivating net connection ropes 712.

The second cultivating net submersible unit 720 is formed parallel to the first cultivating net submersible unit 710, and the configuration is the same as that of the first cultivating net submersible unit 710, and thus the detailed description thereof is omitted here.

Hereinafter, the application of the above embodiment will be described with reference to FIGS. 17 and 18. In the state of FIGS. 17 and 18, if the mobile object 750 is moved in an arrow direction by the tide, a plurality of cultivating nets 713 rise. If the cultivating nets 713 rise by a certain amount so as to be exposed to the area above the surface of water, the movement of the mobile object 750 is limited by the first stopper 770. In this state, if the direction of the tide is changed, the mobile object 750 is moved in the opposite direction by the direction-changed tide, and a plurality of cultivating nets descend. If the cultivating nets 713 descend by a certain amount so as to be submerged, the movement of the mobile object 750 is restricted by the second stopper 780. The mobile object 750 periodically performs the reciprocating motion according to the change of the tide and a plurality of cultivating nets are periodically exposed to the area above the surface of water.

In the embodiment of FIGS. 17 and 18, the mobile object 750 is moved by the tide so that the cultivating net 713 ascends or descends, but even in the state where the mobile object 750 is configured to be changed to the fixed body, the cultivating net 713 may be configured to ascend or descend using the tide. The following two embodiments are possible for this.

First, in the configuration illustrated in FIG. 18, the first hauling rope 711 is extended to both sides, and the mobile members (not shown), which receives force of the tide at both sides, are respectively connected so that the first hauling rope 711 may be moved according to the tide. According to the configuration, the mobile member (not shown) pulls the first hauling rope 711 so as to move the first hauling rope 711 to one side or the other side, and thus the cultivating net 713 ascends or descends.

Second, in the configuration illustrated in FIG. 18, the hanging member 752 is substituted by the rotatable wind-up shaft around which the cultivating net connection rope 712 is coiled, and the rotating water mill is connected to the wind-up shaft by the tidal force. By this configuration, the rotation direction of the wind-up shaft is changed according to the tidal direction, and the cultivating net 713 ascends or descends according to the rotation direction.

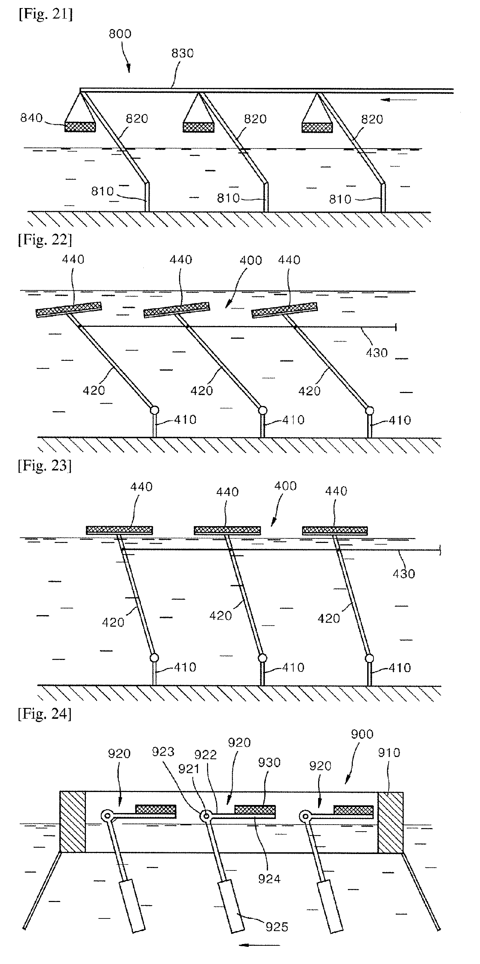

FIGS. 20 and 21 illustrate an oyster farming apparatus according to a fourth embodiment of the present invention. Referring to FIG. 20, the oyster farming apparatus 800 includes a plurality of fixing support units 810, a plurality of rotation support units 820, a hauling rope 830, and a plurality of cultivating nets 840. A plurality of fixing support units 810 are arranged and fixed in a straight line. A plurality of rotation support units are respectively coupled to the fixing support units 810, and are extended upward from the fixing support units 810 in a slant manner. As the rotation support unit 820 is rotated on the fixing support unit 810, the upper and lower positions of the end of the rotation support unit 820 are changed. The hauling ropes 830 are respectively connected to the plurality of rotation support units 820 in order. The hauling ropes may be connected to the operating device, etc. A plurality of cultivating nets 840 hang on the end of the rotation support unit 320.

Furthermore, the application of the fourth embodiment will be described with reference to FIGS. 20 and 21. A plurality of cultivating nets 840 are all submerged in FIG. 20. In this state, if the hauling rope 830 is hauled, the end of the rotation support unit 820 rises while a plurality of rotation support units 820 are rotated on the fixing support unit 810, and a plurality of cultivating nets 840, which hang on the end of the rotation support unit 820, rise to the area above the surface of water so as to be exposed as illustrated in FIG. 21. In the state illustrated in FIG. 21, if the hauling rope 830 is released and is moved in the opposite direction, the plurality of cultivating nets 840 descend so as to be submerged as illustrated in FIG. 20. When FIGS. 20 and 21 are compared, in both states, the rotation support unit 820 is tilted in the same direction, and the rotation support unit 820 illustrated in FIG. 20 is tilted at an angle greater than that of the rotation support unit 820 illustrated in FIG. 21.

FIGS. 22 and 23 illustrate an oyster farming apparatus according to a fifth embodiment of the present invention. Referring to FIG. 22, the oyster farming apparatus 400 includes a plurality of fixing support units 410, a plurality of rotation support units 420, a hauling rope 430, and a plurality of cultivating nets 440. The configuration is substantially the same as that of FIG. 10 except the fact that a plurality of cultivating nets 440 are fixed on the upper end of the plurality of rotation support units 420, and thus the detailed description thereof will be omitted here.

Hereinafter, the operation of the fifth embodiment will be described with reference to FIGS. 22 and 23. A plurality of cultivating nets 440 are all submerged in FIG. 22. In this state, if the hauling rope 430 is hauled, a plurality of rotation support units 420 are rotated on the fixing support unit 410 and the end of the rotation support unit 420 rises, and a plurality of cultivating nets 440, which are fixed on the end of the rotation support unit 420, rise to the area above the surface of water so as to be exposed as illustrated in FIG. 23. In the state illustrated in FIG. 23, if the hauling rope 430 is moved in the opposite direction by releasing the hauling rope 430, a plurality of cultivating nets descend and are submerged as illustrated in FIG. 22. Comparing FIG. 22 with FIG. 23, in both states, the rotation support unit 420 is tilted in the same direction, and the rotation support unit 420 illustrated in FIG. 22 is tilted in an angle greater than that of the rotation support unit 420 illustrated in FIG. 23.

FIGS. 24 to FIG. 26 illustrate an oyster farming apparatus according to a sixth embodiment of the present invention. Referring to FIG. 24, the oyster farming apparatus 900 includes a body 910 and a plurality of cultivating net movement units 920. The body 910 is a structure which may float on the sea, forms an inner space, and is formed in a form in which the upper part and the lower part are opened. The position of the body 910 is fixed by an anchor, etc. A fish cage, etc. may be used as the body 910. A plurality of cultivating net movement units 920 include a shaft 921, and a rotation unit 922 which is coupled in a manner that may be rotated on the basis of the shaft. The shaft 921 is positioned on the surface of water and is extended along the surface of water. A hanging projection 921a, which is projected upward, is prepared. The rotation unit 922 includes a coupling unit which is inserted in a manner that the shaft 921 may be rotated, and a cultivating net installation bar 924 and the operating unit 925. A penetration hole 923a is prepared in the coupling unit 923 so that the shaft may pass the penetration hole 923a. First and second grooves 923b and 923c, into which the hanging projection 921 may be inserted, are positioned in the penetration hole 923a along the circumference direction. The two grooves 923b and 923c correspond to the state where the cultivating net 930 is submerged and the state which is exposed to the area above the surface of water. The cultivating net 930 is installed in the cultivating net installation bar 924. The operation unit 925 is positioned under water and is moved by the tide so as to rotate the rotation unit 922. The angle between the cultivating net installation bar 924 and the operating unit 925 is appropriately determined so that the cultivating net 930 installed in the cultivating net installation bar 924 is submerged or exposed to the area above the surface of water as the rotation unit 922 is rotated.

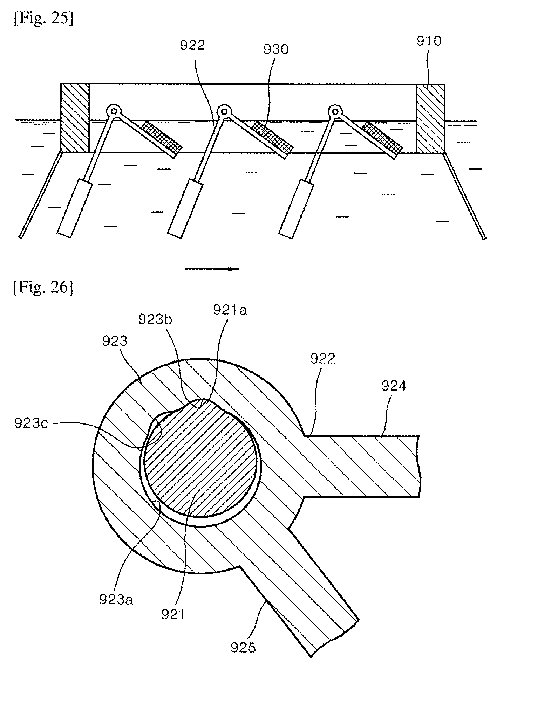

Hereinafter, the operation of the sixth embodiment will be described in detail with reference to FIGS. 24 to 26. Referring to FIG. 24, a plurality of cultivating nets 930 are exposed to the area above the surface of water. At this time, the hanging projection is inserted into the first groove 923b as illustrated in FIG. 26, and maintains the state illustrated in FIG. 24 by the limitation of the rotation of the rotation unit 922. In this state, if the tide flows in a direction that lowers the cultivating net 930 as illustrated as the arrow, the rotation unit 922 is rotated by the tide, and the cultivating net 930 descends so as to be submerged. FIG. 25 illustrates the state that the cultivating net 930 is submerged. At this time, the hanging projection 921a is inserted into the second groove 923c and the rotation of the rotation unit 922 is limited so as to maintain the state illustrated in FIG. 25. In the stated illustrated in FIG. 25, if the direction of the tide is changed, the rotation unit 922 is rotated so that the cultivating net 930 is exposed to the area above the surface of water as illustrated in FIG. 24.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An oyster farming apparatus comprising:
a hauling rope which is extended along a surface of water on the surface of water;
a plurality of cultivating net connection ropes which are extended downward from the hauling rope at a plurality of spots of the hauling rope; and
a plurality of hanging members which are alternately arranged with the plurality of cultivating connection ropes along the extended direction of the hauling rope,
wherein, as the hauling rope is hauled, each of the plurality of cultivating connection ropes is hung on each of the plurality of hanging members so that the plurality of cultivating connection ropes rise.

2. The oyster farming apparatus of claim 1, further comprising an operating motor which hauls the hauling rope.

3. The oyster farming apparatus of claim 1,
wherein the hanging member includes a plurality of rings, which the hauling rope passes, and includes a ring fixing structure which fixes the plurality of rings, and
wherein the ring-fixing structure includes a fixing rope which is extended along the extended direction of the hauling rope and is fixed by a consecutive coupling of the plurality of rings.

4. The oyster farming apparatus of claim 3, wherein the hauling rope is positioned above the fixing rope, and the plurality of cultivating net connection ropes pass the ring-shaped ring.

5. The oyster farming apparatus of claim 1, wherein the hanging member is of a ring shape having an opening part which is partly opened.

6. The oyster farming apparatus of claim 1,
wherein the hanging member includes a plurality of rings, which the hauling rope passes, and includes a ring fixing structure which fixes the plurality of rings, and
wherein the ring-fixing structure includes a support bar which respectively fixes the plurality rings.

7. The oyster farming apparatus of claim 1, further comprising a hauling drum around which the plurality of hauling ropes are coiled,
wherein there are a plurality of hanging ropes, and
wherein at least one of the plurality of hauling ropes is coiled around the hauling drum in the opposite direction

8. An oyster farming apparatus comprising:
a fixing rope which is extended along a surface of water on the surface of water and at which a plurality of ring-shaped hanging members are fixed;
a plurality of cultivating connection ropes which are extended downward from the fixing rope and on which a plurality of cultivating nets respectively hang;
a hauling rope which passes the plurality of hanging members in order and cross the cultivating net connection rope so as to be coupled; and
a rotatable wind-up shaft around which one end of the hauling rope is coiled.

9. An oyster farming apparatus comprising:
a fixing rope which is extended along a surface of water on the surface of water;
a plurality of cultivating net connection ropes which are extended downward from the fixing rope and on which a plurality of cultivating nets respectively hang;
a hauling rope which is positioned below the fixing rope and is extended along the surface of water on the surface of water, and at which a plurality of ring-shaped hanging members, which the plurality of cultivating connection ropes respectively pass, are fixed; and
a rotatable wind-up shaft around which one end of the hauling rope is coiled.

10. An oyster farming apparatus comprising:
a hauling rope which is extended along a surface of water on the surface of water and at which a plurality of connection rings are fixed;
a fixing rope which passes the plurality of connection rings in order;
a plurality of cultivating net connection ropes which are vertically extended, on which a plurality of cultivating nets hang, and which are connected to the connection ring;
a plurality of hanging members on which the plurality of cultivating net connection ropes respectively hang; and
a rotatable wind-up shaft around which one end of the hauling rope is coiled.

11. An oyster farming apparatus comprising:
a plurality of cultivating connection ropes which are vertically extended and on which a plurality of cultivating nets hang;
a wind-up shaft around which upper parts of the plurality of cultivating net connection ropes are respectively coiled; and
an operating motor which rotates the wind-up shaft.

12. An oyster farming apparatus comprising:
a hauling rope which is fixed to be extended along a tidal direction on a sea level;
a plurality of cultivating net connection ropes which are extended downward from the hauling rope at a plurality of spots of the hauling rope;
a mobile object which may be moved by a tide and includes a plurality of hanging members which are arranged alternately with the plurality of cultivating net connection ropes along an extended direction of the hauling rope; and
a guide structure which guides movement of the mobile object,
wherein, as the mobile object is moved by the tide, the plurality of cultivating net connection ropes respectively hang on the plurality of hanging members so that the plurality of cultivating net connection ropes ascend.

13. The oyster farming apparatus of claim 12, wherein the guide structure is extended along a tidal direction and includes a fixed guide rope and two rings which the guide rope passes and which are coupled to the mobile object.

14. The oyster farming apparatus of claim 12, further comprising two stoppers which interact with the two rings to limit the movement section of the mobile object,
wherein a hanging groove, on which the ring may be hung, is prepared in the two stoppers.

15. An oyster farming apparatus comprising:
a hauling rope which is connected to a mobile member which is moved along a tidal direction on a surface of water;
a plurality of cultivating net connection ropes which are extended downward from the hauling rope at a plurality of spots of the hauling rope; and
a fixing body including a plurality of hanging members which are arranged alternately with the plurality of cultivating net connection ropes along an extended direction of the hauling rope,
wherein the hauling rope can perform a reciprocating motion along the extended direction according to the movement of the mobile member.

16. An oyster farming apparatus comprising:
a fixing body which is coupled such that a wind-up shaft may be rotated;
a plurality of cultivating net connection ropes which are extended downward and whose upper part is coiled around the wind-up shaft; and
a water turbine which is rotated along with the wind-up shaft,
wherein the water turbine is rotated by the tide.

17. An oyster farming apparatus comprising:
a plurality of fixing support units;
a plurality of rotation support units which are rotatably connected to the plurality of respective fixing support units and whose end's upper and lower positions are changed;
a hauling rope which is connected to the plurality of rotation support units respectively in order; and
a plurality of cultivating nets which are connected to the rotation support unit,
wherein the cultivating net is hung on and connected to the rotation support unit, or is fixed at and coupled to the rotation support unit.

18. An oyster farming apparatus comprising:
a cultivating net installation bar which allows rotation so that upper and lower positions of the end are possible and at which the cultivating net is installed; and
an operating unit which allows rotation of both directions by a tide,
wherein the cultivating net installation bar is rotated by rotation of the operating unit, and the cultivating net installation bar and the operating unit are integrally formed.

19. An oyster farming apparatus of claim 17, further comprising a hanging structure so that the cultivating net installation bar may stop rotation at two rotation positions.
